# EUROPEAN PATENT APPLICATION

(11) **EP 4 582 382 A1**
(43) Date of publication of application: **09.07.2025**
(21) Application number: 24217724.4
(22) Date of filing: 05.12.2024
(51) Int. Cl.: C01C 1/04

(54) **AMMONIA SYNTHESIS SYSTEM AND METHOD USING THE SAME**

(30) Priority: 08.01.2024 KR 20240002660; 25.01.2024 KR 20240011421
(71) Applicant: SK Innovation Co., Ltd., Seoul 03188 (KR)
(72) Inventor: JEONG, Jae Hun, 34124 Daejeon (KR); SONG, Da Eun, 34124 Daejeon (KR); LEE, Jun Young, 34124 Daejeon (KR); IM, Ju Hwan, 34124 Daejeon (KR); KIM, Sun Kug, 34124 Daejeon (KR); KIM, Ye Jin, 34124 Daejeon (KR)
(74) Representative: Prüfer & Partner mbB Patentanwälte · Rechtsanwälte

(57) **Abstract**

An ammonia synthesis system, an operation method thereof, and an ammonia synthesis method are provided. The system includes a compressor for compressing mixed gas; a feed supply line for supplying the mixed gas to the compressor; an ammonia synthesis reactor for synthesizing ammonia by feeding the mixed gas compressed by the compressor into the reactor; an air separation unit for separating nitrogen from air; a first cooler for cooling syngas including ammonia discharged from the ammonia synthesis reactor; and a second cooler for heat-exchanging gaseous nitrogen separated by the air separation unit with the syngas cooled by the first cooler, wherein gaseous nitrogen heat-exchanged by the second cooler is supplied to the feed supply line.

## Description

### TECHNICAL FIELD

The present disclosure generally relate to an ammonia synthesis system and a method using the same.

### BACKGROUND

There is an increasing need for renewable energy to achieve a greenhouse gas reduction to cope with climate change and depletion of oil resources. However, areas that meet an appropriate condition for renewable energy production are scattered, and it is thus essential to find out means for storing and transporting renewable energy. For example, renewable energy, which is abundant in the equatorial and southern hemisphere areas, is required to be transported to the northern hemisphere where renewable energy is highly demanded.

In addition, renewable energy has temporal variability, thus making an electric storage device essential. Ammonia is spotlighted as an energy carrier to solve the problems occurring from the area ubiquity and temporal variability of renewable energy. In particular, pure ammonia may be liquefied at room temperature and at pressures 8.5 atmospheres or higher, or at -33 °C or lower and at atmorpheric pressure according to T-P correlation, and thus be stored and transported more easily than hydrogen. Therefore, as an alternative to solve the problems occurring from the area ubiquity and temporal variability of renewable energy, it is necessary to focus on synthesizing ammonia by using hydrogen and nitrogen, which are produced using electricity produced from renewable energy, as its raw materials.

Hydrogen, one of the the main raw materials for the ammonia synthesis, may be produced by a water electrolyzer powered by renewable energy such as solar or wind energy, although these renewable energy sources have temporal variability. It is in this context that the embodiments of the present disclosure arise.

### SUMMARY

One embodiment of the present disclosure is directed to providing an ammonia synthesis system which may flexibly cope with a change in a flow rate that occurs during a production cycle.

Another embodiment of the present disclosure is directed to providing an ammonia synthesis system which may maintain a uniform flow rate distribution at the front end of a catalyst bed included in an ammonia synthesis reactor even when a flow rate of a raw material, such as hydrogen, fed into the ammonia synthesis system is decreased, in particular if the decrease in flow rate is substantial.

Still another embodiment of the present disclosure is directed to providing an ammonia synthesis system which may improve an ammonia synthesis yield by enabling a temperature in the central and in outer parts of a catalyst bed to be uniform, in particular at the beginning of its operation.

One embodiment of the present disclosure is directed to providing an ammonia synthesis system which may improve an ammonia synthesis yield at the beginning of its operation by preheating a catalyst bed before the beginning of its operation.

Another embodiment of the present disclosure is directed to providing an ammonia synthesis system which may save energy by reducing an amount of energy required by the system during its operation.

Another embodiment of the present disclosure is directed to providing an ammonia synthesis system which may increase a catalyst replacement cycle by maintaing the height of each catalyst bed even during the operation.

Another embodiment of the present disclosure is directed to providing an ammonia synthesis system which may stably operate a compressor by preventing a surge phenomenon from occurring in the compressor even when a flow rate of a raw material fed into the ammonia synthesis system is changed.

One embodiment of the present disclosure is directed to providing an ammonia synthesis system which may cope flexibly with ammonia separation even when an ammonia production volume is changed as the flow rate of the raw material fed into the ammonia synthesis system is changed.

Another embodiment of the present disclosure is directed to providing an ammonia synthesis system which may reduce energy required for ammonia separation by coping with a change in an ammonia production volume even when this change occurs as the flow rate of the raw material fed into the ammonia synthesis system is changed.

In one embodiment, provided is an ammonia synthesis system including a compressor for compressing mixed gas; a feed supply line for supplying the mixed gas to the compressor; an ammonia synthesis reactor for synthesizing ammonia by feeding the mixed gas compressed by the compressor into the reactor; an air separation unit for separating nitrogen from air; a first cooler for cooling syngas including ammonia discharged from the ammonia synthesis reactor; and a second cooler for heat-exchanging gaseous nitrogen separated by the air separation unit with the syngas cooled by the first cooler, wherein gaseous nitrogen heat-exchanged by the second cooler is supplied to the feed supply line.

The system may further include an air cooler for cooling air by heat-exchanging gaseous nitrogen separated by the air separation unit with air fed into the air separation unit, wherein gaseous nitrogen heat-exchanged by the air cooler is fed to the second cooler.

The system may further include a second cooler bypass line, which through the syngas is cooled and separated only by the first cooler, or a first cooler bypass line for passing the syngas directly to the second cooler without through the first cooler.

The system may further include a buffer tank storing the nitrogen heat-exchanged in the second cooler and/or a regeneration stream including hydrogen and nitrogen cooled and separated from the syngas in the second cooler.

The system may further include an adsorption device including an adsorbent at the front end and at the rear end of the first cooler or the second cooler.

The ammonia synthesis reactor may include two or more catalyst beds included in the ammonia synthesis reactor; a backflow prevention plate disposed downstream of each of the catalyst beds, optionally except for the catalyst bed disposed at the lowest of the two or more catalyst beds, for preventing a backflow of the mixed gas; a distribution device disposed upstream of each of the two or more catalyst beds and distributing the mixed gas to the catalyst bed; and mixed gas supply lines arranged to supply the mixed gas to each distribution device.

The system may further include distribution plates each disposed between the catalyst bed and the distribution device.

The system may further include a plurality of mixed gas flow pipes which are fixed to a lower surface of the distribution plate and through which the mixed gas flows.

The mixed gas flow pipe may have a bottom surface and a side surface connecting the bottom surface with the distribution plate, a plurality of upper openings may be formed in a side surface of an upper part of the mixed gas flow pipe spaced apart from each other along a circumference of the pipe, a plurality of middle openings may be formed in a side surface of a middle part of the mixed gas flow pipe spaced apart from each other along the circumference, a plurality of lower openings may be formed in a side surface of a lower part of the mixed gas flow pipe spaced apart from each other along the circumference, and the mixed gas flow pipe may include a cover surrounding at least some regions of the side surface of the mixed gas flow pipe to provide a space for a fluid flowing out of the side surface of the mixed gas flow pipe after passing through the upper opening to be guided toward the middle opening.

The mixed gas flow pipe may further include a separator plate dividing the upper and middle parts of the mixed gas flow pipe from each other.

The system may further include a heat exchanger disposed downstream from each of the two or more catalyst beds to remove heat from an effluent of the catalyst bed.

Each of the mixed gas supply lines may include a flow regulating device.

In another embodiment, provided is a method for synthesizing ammonia using the ammonia synthesis system.

In another embodiment, provided is an operation method of the ammonia synthesis system described above, which further includes a second cooler bypass line, the method including the following selectively performed modes a two-stage cooling mode in which the syngas passes through both the first cooler and the second cooler; and a second cooler bypass mode in which the syngas passes through only the first cooler and bypasses the second cooler through the second cooler bypass line.

In still another embodiment, provided is an ammonia synthesis method including
compressing mixed gas by a compressor and feeding the compressed gas into an ammonia synthesis reactor;
producing syngas including ammonia by reacting the compressed mixed gas by the ammonia synthesis reactor; and cooling the syngas with the following selectively performed modes:
   a two-stage cooling mode in which the syngas passes through both the first cooler and the second cooler;
   a second cooler bypass mode in which the syngas passes through only the first cooler and bypasses the second cooler through the second cooler bypass line; and
   a first cooler bypass line in which the syngas passes through only to the second cooler without through the first cooler; wherein the syngas is cooled in the second cooler by exchanging with gaseous nitrogen separated by the air separation unit,
   wherein the gaseous nitrogen after the heat-exchanging is supplied to the compressor.

The gaseous nitrogen, before the heat-exchanging in the second cooler, may be heat-exchanged with the air to feed into the air separator unit in the air cooler.

The ammonia synthesis reactor may include two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of the mixed gas; a distribution device disposed upstream from each of the two or more catalyst beds and distributing the mixed gas to the catalyst bed; and mixed gas supply lines arranged to supply the mixed gas to each distribution device.

Other features and aspects will be apparent from the following detailed description, the drawings, and the claims.

### BRIEF DESCRIPTION OF THE DRAWINGS

FIG. 1 is a schematic view showing an ammonia synthesis reactor according to one embodiment of the present disclosure.
FIG. 2 is a schematic view showing an ammonia synthesis reactor according to another embodiment of the present disclosure.
FIG. 3 is a perspective view showing a distribution plate and a mixed gas flow pipe according to another embodiment of the present disclosure.
FIG. 4 is a perspective view showing the inside of the mixed gas flow pipe according to one embodiment of the present disclosure.
FIG. 5 is a perspective view showing the inside of a mixed gas flow pipe according to another embodiment of the present disclosure.
FIG. 6 is a view showing a state where a backflow prevention cap of a backflow prevention plate is closed according to another embodiment of the present disclosure.
FIG. 7 is a view showing a state where the backflow prevention cap of the backflow prevention plate is opened according to another embodiment of the present disclosure.
FIG. 8 shows a process flow view of the ammonia synthesis system according to another embodiment of the present disclosure.
FIG. 9 shows a process flow view of the ammonia synthesis system according to another embodiment of the present disclosure.

### DETAILED DESCRIPTION

Various advantages and features of the embodiments of the present disclosure and methods for accomplishing the same are apparent from the embodiments described in detail below. However, the embodiments of the present disclosure are not limited to the embodiments disclosed below, and may be implemented in various different forms. These embodiments are provided to allow those skilled in the art to appreciate the scope of the present disclosure.

Unless defined otherwise, all terms (including technical and scientific terms) used in the specification have the same meanings as understood by those skilled in the art to which the present disclosure pertains.

A term of a singular number used in the specification may be interpreted as including its plural number unless otherwise indicated.

A numerical range used in the specification may include the lower and upper limits and all values within that range, increments logically derived from the extent and width of the defined range, all values delimited by those limits, and all possible combinations of the upper and lower limits of a numerical range delimited by different extents. The defined numerical range may also include values outside the numerical range, which may occur due to experimental errors or rounding of values unless otherwise specified in the specification.

A term "to include" or "to comprise" in the specification is a comprehensive description that has the meaning equivalent to an expression such as "to include", "to comprise", "to contain", "to have", or "to be featured", and does not exclude an element, a material, or a process that is not additionally enumerated.

The terms "upper", "middle" and "lower" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

Unless otherwise indicated, a unit of % used in the specification may indicate % by weight.

In the specification, "A to B" indicates "A or more and B or less" unless otherwise specifically defined.

In the specification, "regeneration stream" indicates gas including hydrogen and nitrogen, and may further include a small amount of unseparated ammonia.

In the specification, "mixed gas" indicates gas including at least one or both selected from the group consisting of hydrogen and nitrogen.

In the specification, the term "syngas" indicates gas including ammonia and unreacted hydrogen and nitrogen.

In the specification, the flow rate that can be changed during the production cycle may be classified into three categories for convenience. As described above, the flow rate may be classified into a low flow rate, a medium flow rate, and a high flow rate. However, the change in the flow rate may be easily regulated by the common sense or judgment of those skilled in the art. The low flow rate case indicates a case where the flow rate is less than half (50%) of an annual average production flow rate (100%), the medium flow rate case indicates a case where the flow rate is half (50%) or more and less than twice (200%) of the annual average production flow rate (100%), and the high flow rate case indicates a case where the flow rate is more than twice (200%) of the annual average production flow rate (100%), however, the embodiments are not limited thereto.

Renewable energy, such as the solar energy or wind energy, shows temporal variability. For example, the solar energy is unable to be used at night. Therefore, an ammonia synthesis system is unable to be always operated at a constant flow rate, and it is thus necessary to anticipate and handle a change in the flow rate that occurs during a production cycle.

In addition, a flow rate distribution at the front end of a catalyst bed included in an ammonia synthesis reactor may get more and more less unifrom when a flow rate of the raw material such as hydrogen fed into the ammonia synthesis system decreases or increases.

In addition, in a conventional ammonia synthesis system, a temperature deviation may occur in the central and in outer parts of the catalyst bed especially at the beginning of its operation, which may reduce an ammonia synthesis yield.

In addition, when the flow rate of the raw material fed into the ammonia synthesis system is changed, for example, when the flow rate of the fed raw material is decreased, a surge phenomenon may occur in a compressor, thus making it difficult in a stable compressor operation.

In addition, when the flow rate of the raw material fed into the ammonia synthesis system is changed, an ammonia production volume may be changed as the flow rate of the raw material is changed, thus making it difficult to reduce energy required for separating ammonia.

Therefore, an ammonia synthesis system of the present disclosure may cope with the change in the flow rate that occurs during the production cycle, while suppressing the surge phenomenon in the compressor and permitting stable compressor operation, and may address the issues of the non-uniform flow rate distribution that can occur at the front end of the catalyst bed leading to the reduced ammonia synthesis yield caused by the temperature deviation in the central and in outer parts of the catalyst bed at the beginning of the operation. In addition, and the system may reduce the energy required for separating ammonia.

Hereinafter, an ammonia synthesis system of the present disclosure is described in detail. However, the embodiments are only illustrative, and the present disclosure is not limited to the specific embodiments described below.

One embodiment of the present disclosure may provide an ammonia synthesis system including a compressor for compressing mixed gas; a feed supply line for supplying the mixed gas to the compressor; an ammonia synthesis reactor for synthesizing ammonia by feeding the mixed gas compressed by the compressor into the reactor; an air separation unit for separating nitrogen from air; a first cooler for cooling syngas including ammonia discharged from the ammonia synthesis reactor; and a second cooler for heat-exchanging gaseous nitrogen separated by the air separation unit with the syngas cooled by the first cooler, wherein gaseous nitrogen heat-exchanged by the second cooler is supplied to the feed supply line.

The ammonia synthesis system of the present disclosure may flexibly cope with the change in the flow rate that occurs during the production cycle, suppressing a surge phenomenon in the compressor which may inhibit a stable compressor operation, and may address the issues of a non-uniform flow rate distribution at the front end of a catalyst bed and a reduced ammonia synthesis yield caused by a temperature deviation in the central and in outer parts of the catalyst bed at the beginning of its operation. The ammonia synthesis system of the present disclosure may reduce energy required for separating ammonia, in particular, may stably operate the compressor by suppressing the surge phenomenon in the compressor even when the flow rate of a raw material fed into the ammonia synthesis system is changed. This configuration is possible by supplying nitrogen separated by the air separation unit to the feed supply line.

Further, the ammonia synthesis system according to an embodiment of the present disclosure may flexibly cope with the ammonia separation even when an ammonia production volume is changed by the change in the raw material flow rate fed into the ammonia synthesis system. Furthermore, the ammonia synthesis system according to an embodiment of the present disclosure may reduce the energy and the costs required for separating ammonia by coping with the change in the ammonia production volume by the change in the raw material flow rate fed into the ammonia synthesis system.

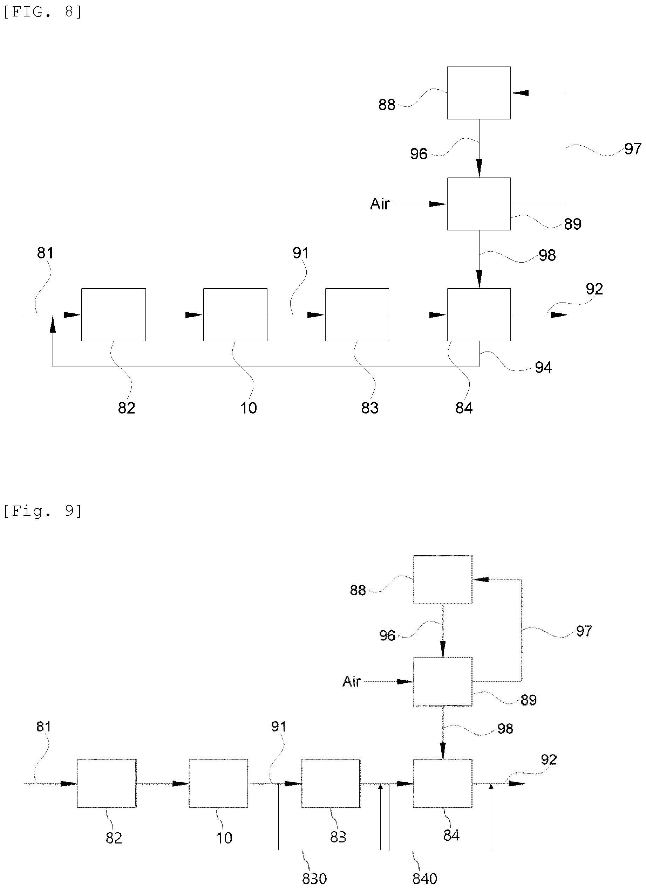

FIG. 8 shows a process flow view of the ammonia synthesis system according to one embodiment of the present disclosure. Referring to FIG. 8, the mixed gas may be fed into a compressor 82 through a feed supply line 81. The mixed gas compressed by the compressor 82 may be fed into an ammonia synthesis reactor 10. Syngas 91 produced through the reaction by the ammonia synthesis reactor 10 may be cooled by being fed into a first cooler 83. The cooled syngas may be secondarily cooled by being fed into a second cooler 84 and heat-exchanged with gaseous nitrogen 96 separated by an air separation unit 88. Ammonia may be condensed and separated from the secondarily cooled syngas. The gaseous nitrogen fed into the second cooler 84 may be heat-exchanged with the air fed into the air separation unit 88 by an air cooler 89. The cooled air 97 from the air cooler 89 may be supplied to the air separation unit 88. Gaseous nitrogen 94 heat-exchanged by the second cooler 84 may be supplied to the feed supply line 81.

In detail, when the flow rate of the syngas including ammonia is high or the ammonia content in the syngas is large, an ammonia synthesis system 1 may cool and separate ammonia by primarily cooling the syngas by the first cooler 83 and secondarily cooling ammonia by the second cooler 84. On the other hand, when the flow rate of the syngas including ammonia is low or the ammonia content in the syngas is small, the ammonia synthesis system may cool and separate ammonia by cooling ammonia only by the first cooler 83 or the second cooler 84. That is, the ammonia synthesis system according to the present disclosure may provide a flexible process which can flexibly cope with the change of an ammonia production flow rate during the production cycle while performing appropriate ammonia separation. In addition, when the flow rate of the syngas including ammonia is low or the ammonia content in the syngas is small, the ammonia synthesis system may regulate a cooler operation to thus reduce the energy and the costs required for separating ammonia.

The ammonia synthesis system may further include a feed heat exchanger for exchanging heat between a mixed gas feed and the syngas, flowing through the feed supply line, at the front of the first cooler. In addition, the ammonia synthesis system may further include a steam generator for recovering heat energy, included in the syngas, at the front of the first cooler. The steam generator may generate steam by exchanging heat between the syngas and water. That is, the ammonia synthesis system may recover the heat energy included in the syngas before feeding the syngas into the first cooler. Here, a temperature of the syngas discharged from the ammonia synthesis reactor may range from 200 to 800 °C, 200 to 600 °C, or 300 to 500 °C, but the embodiments are not limited thereto.

The ammonia synthesis system may include the first cooler 83 for primarily cooling the syngas.

The first cooler 83 may primarily cool the syngas. The syngas may be primarily cooled by the first cooler 83. In addition, ammonia in the syngas may be separated by being condensed by the first cooler 83. In detail, the ammonia may be separated by cooling the syngas and separating the gas and liquid from each other. The gas-liquid separation may be performed once or performed twice or more.

The first cooler 83 may cool the syngas by heat-exchanging the syngas with a refrigerant. The refrigerant may include at least one or more selected from the group consisting of chlorofluorocarbons (CFCs), hydrochlorofluorocarbons (HCFCs), hydrofluorocarbons (HFCs), hydrofluoroolefins (HFOs), fluorinated ether compounds, hydrocarbons, ammonia, water, air, carbon dioxide, and sulfur dioxide, but the embodiments are not limited thereto.

The syngas 91 discharged from the ammonia synthesis reactor 10 may include ammonia in an amount ranging from 1 to 90 vol%, 1 to 50 vol%, 5 to 30 vol%, or 10 to 20 vol% relative to the total syngas.

The gas-liquid separation may be performed by condensing (in the ranges of) 10 to 99.9999 vol%, 50 to 99.9999 vol%, 60 to 99.999 vol%, or 70 to 99.99 vol% of ammonia included in the syngas.

The gas-liquid separation may be performed by condensing ammonia at a temperature ranging from -150 to 200°C, -150 to 20°C, or -100 to 50°C, and/or under a pressure ranging from 0.0001 to 30 megapascal (MPa), 0.007 to 20.0 MPa, 1 to 20.0 MPa, or 3 to 20.0 MPa.

The feed heat exchanger, the steam generator, the first cooler, the second cooler described below, or the air cooler described below may be at least one or more selected from the group consisting of a spiral heat exchanger, a plate heat exchanger, a double-tube heat exchanger, a multi-tube cylindrical heat exchanger (shell-and-tube heat exchanger), a multi-tubular heat exchanger, a spiral tube heat exchanger, and a spiral plate heat exchanger, but the embodiments are not limited thereto.

In one embodiment according to the present disclosure, the ammonia synthesis system may include the air separation unit 88 for separating nitrogen from air. The air separation unit 88 may be used to produce green ammonia made from renewable electricity, particularly by using excess electricity generated from wind or solar power to electrolyze water and produce hydrogen. In general, the air separation unit 88 may use air liquefaction separation. The air separation unit 88 may separate oxygen, nitrogen, and argon gases, from air based on the boiling points (oxygen: -183 °C, nitrogen: -196 °C, and argon: -186 °C).

In one embodiment according to the present disclosure, the air separation unit 88 may include a compression unit, a cooling unit, a pretreatment unit, a booster compressor, a liquefaction unit, a distillation unit, a preheater, and a turbine, but the embodiments are not limited thereto.

In one embodiment according to the present disclosure, the air separation unit 88 may separate nitrogen from air and condense into liquid nitrogen like a conventional air separation unit (ASU).

In addition, in another embodiment according to the present disclosure, the air separation unit may also separate and discharge gaseous nitrogen by separating oxygen and argon with higher boiling points than nitrogen and liquefying the same. As described above, when the air separation unit 88 does not liquefy nitrogen, energy required to liquefy gaseous nitrogen, which accounts for about 80% of air, may be reduced, thereby reducing energy required to separate gaseous nitrogen from air.

In another embodiment according to the present disclosure, the ammonia synthesis system may further include the air cooler 89 for cooling air by heat-exchanging nitrogen separated by the air separation unit with air to feed into the air separation unit 88. In addition, in one embodiment according to the present disclosure, the ammonia synthesis system may feed gaseous nitrogen heat-exchanged by the air cooler to the second cooler 84. The ammonia synthesis system may further include the air cooler 89 to thus first heat-exchange nitrogen with air to feed into the air separation unit 88 increasing temperature of nitrogen rather than that discharged from the air separation unit 88, thereby reducing the energy required by the air separation unit for cooling air, and the ammonia synthesis system may adjust a temperature of gaseous nitrogen heat-exchanged by the air cooler 89 not to be excessively low compared to the boiling point of ammonia and then feed gaseous nitrogen into the second cooler 84, thereby reducing the energy required for cooling air and ammonia.

In one embodiment according to the present disclosure, the ammonia synthesis system may include the second cooler 84 for exchanging heat between gaseous nitrogen separated by the air separation unit and the syngas cooled by the first cooler 83. The gaseous nitrogen separated by the air separation unit may be fed into the second cooler 84 after being heat-exchanged by the air cooler 89.

The second cooler 84 may secondarily cool the syngas. The syngas may also be secondarily cooled by the second cooler 84 after being primarily cooled by the first cooler 83. The syngas may be directly cooled by the second cooler 84 without passing through the first cooler 83. Ammonia in the syngas may be separated by being condensed by the second cooler 84. In detail, the ammonia may be separated by cooling the syngas into the gas and liquid from each other. The gas-liquid separation may be performed once or performed twice or more.

In this way, the ammonia synthesis system according to the present disclosure may significantly reduce a cooling load required by the first cooler 83 by separating ammonia through two-stage cooling using the first cooler 83 and the second cooler 84. In addition, the ammonia synthesis system may efficiently and flexibly cope with the change in the flow rate of the raw material by the two-stage cooling as described above. For example, when the flow rate of the fed raw material in the reactor is low, the ammonia synthesis system may cool and separate ammonia by using only the first cooler 83 using the refrigerant. The cooling load may be increased when the flow rate of the fed raw material in the reactor is high, and the ammonia synthesis system may thus cool the refrigerant by the first cooler 83 and then cool by gaseous nitrogen and separate ammonia in the second cooler 84. That is, the ammonia synthesis system may reduce the energy required for cooling and separating ammonia and thereby prevent energy loss by coping with changes in the flow rate of the ammonia synthesis raw material by appropriately distributing the cooling load to each cooler.

According to an embodiment of the present disclosure, a heat exchange medium used by the second cooler 84 may preferably (but not necessarily) be gaseous nitrogen. If using liquid nitrogen as the heat exchange medium used by the second cooler, air may be unduly cooled to produce liquid nitrogen by the air separation unit, and excessive energy may thus be consumed for cooling, making it difficult to reduce energy consumed throughout the process. In addition, if liquid nitrogen having -196°C or lower, which is at or below the boiling point of nitrogen, is used as an ammonia cooling medium by the second cooler 84, a temperature of ammonia being cooled may be unnecessarily low because a boiling point of ammonia is only about -33°C, which may result in a huge loss of energy. In addition, a large amount of energy may be absorbed when liquid nitrogen vaporizes, and if this phase change process is accompanied when performing the cooling by the second cooler 84, it may be difficult to flexibly distribute the cooling load to the first cooler 83 and the second cooler 84 during a process operation by coping with changes in the flow rate of the raw material. On the other hand, when gaseous nitrogen is used as the heat exchange medium in the second cooler 84, it is possible to reduce the energy required by the air separation unit for liquefying nitrogen, prevent the energy loss due to unnecessarily lowering the temperature of the ammonia being cooled, and flexibly operate the process by coping with changes in the flow rate of the raw material.

The temperature of gaseous nitrogen may be in a range from -195 to -40 °C, but the embodiments are not limited thereto, and it is sufficient for gaseous nitrogen to have a gaseous phase of nitrogen based on the pressure of the nitrogen.

The gas-liquid separation by the second cooler may be performed by condensing (in ranges of) 50 to 99.9999 vol%, 60 to 99.999 vol%, or 70 to 99.99 vol% of ammonia included in the syngas.

The gas-liquid separation by the second cooler 84 may be performed by condensing ammonia at a temperature ranging from -150 to 200°C, -150 to 20°C, or -100 to 50°C, and/or under the pressure ranging from 0.0001 to 30 megapascal (MPa), 0.007 to 20.0 MPa, 1 to 20.0 MPa, or 3 to 20.0 MPa.

The second cooler 84 may be at least one or more selected from the group consisting of a spiral heat exchanger, a plate heat exchanger, a double-tube heat exchanger, a multi-tube cylindrical heat exchanger (shell-and-tube heat exchanger), a multi-tubular heat exchanger, a spiral tube heat exchanger, and a spiral plate heat exchanger, and is not limited thereto.

The second cooler 84 may be disposed at the front end of the first cooler 83 rather than at the rear end of the first cooler 83. That is, ammonia may be separated by being preliminarily cooled by the second cooler 84 and then be secondarily cooled by the first cooler 83. The ammonia synthesis system may primarily cool ammonia by the second cooler 84 and then secondarily cool ammonia by the first cooler 83.

In another embodiment according to the present disclosure, gaseous nitrogen 94 heat-exchanged by the second cooler 84 may be supplied to the feed supply line 81. Gaseous nitrogen heat-exchanged by the second cooler 84 may be supplied to the feed supply line through a nitrogen supply line. In the ammonia synthesis system, a buffer tank may be installed in the nitrogen supply line, and nitrogen heat-exchanged by the second cooler 84 may thus be stored to cope with changes in the flow rate of the fed ammonia synthesis raw material. For example, when the flow rate of the raw material fed into the compressor 82 is high, nitrogen may be stored in the buffer tank instead of being supplied to the feed supply line 81. In addition, when the flow rate of the raw material fed into the compressor 82 is low, the surge phenomenon may occur in the compressor 82, which may be prevented by supplying nitrogen stored in the buffer tank to the feed supply line 81. The buffer tank may permit a flexible supply of nitrogen to cope with changes in the flow rate of the raw material and provide for stable compressor operation.

The ammonia synthesis system may retrieve energy included in nitrogen heat-exchanged by the second cooler 84 through additional heat exchange before nitrogen is supplied to the feed supply line 81. The energy retrieve as described above may be performed through the heat exchanger , but the embodiments are not limited thereto.

A flow regulating device may be installed downstream from the buffer tank in the nitrogen supply line. The flow regulating device may be installed downstream from the buffer tank to thus regulate the flow rate of nitrogen ultimately supplied to the feed supply line 81. For example, when the flow rate of the fed raw material is high, the flow regulating device may be closed for nitrogen to be stored in the buffer tank rather than being supplied to the feed supply line 81. In addition, when the flow rate of the fed raw material is low, the surge phenomenon may occur in the compressor 82, which may be prevented by opening a flow regulating device and supplying nitrogen stored in the buffer tank to the feed supply line 81. The flow regulating device may provide for the flexible supply of nitrogen to cope with the change in the flow rate of the raw material and provide for stable compressor operation.

In addition, the second cooler 84 may cool and separate the syngas into ammonia and the regeneration stream including hydrogen and nitrogen. The ammonia synthesis system according to the present disclosure may supply the regeneration stream including hydrogen and nitrogen separated by the second cooler 84 to the feed supply line 81 disposed before the compressor 82 through the feed recirculation line. In the ammonia synthesis system, the buffer tank may be installed in the feed recirculation line to store the regeneration stream flowing in through the feed recirculation line, thereby coping with changes in the flow rate of the fed ammonia synthesis raw material.

In addition, the flow regulating device may be installed upstream from the buffer tank in the feed recirculation line to regulate the flow rate of the regeneration stream flowing into the buffer tank, thereby flexibly coping with the change in the flow rate.

The flow regulating device may be installed downstream from the buffer tank in the feed recirculation line to regulate the flow rate of the regeneration stream ultimately supplied to the feed supply line.

In addition, the ammonia synthesis system may further include an adsorption device including an adsorbent at the front end or the rear end of the first cooler or the second cooler. An installation location of the adsorption device may be appropriately selected based on a process condition.

The adsorbent may be at least one or more selected from the group consisting of silica gel, zeolite, and activated carbon, is not limited thereto, and may use a conventional adsorbent.

In one embodiment according to the present disclosure, the ammonia synthesis system may further include a reactor recirculation line connected from the feed recirculation line to the ammonia synthesis reactor.

The reactor recirculation line may be directly connected to the ammonia synthesis reactor. In addition, the reactor recirculation line may be connected to each of mixed gas supply lines described below or connected to one of the mixed gas supply lines. In addition, the reactor recirculation line may be connected to a main header of the mixed gas supply line described below, but the embodiments are not limited thereto. The flow regulating device may be installed in the reactor recirculation line.

Referring to Fig. 9, the ammonia synthesis system of the present disclosure may further include a second cooler bypass line 840. Through the second cooler bypass line, ammonia may be cooled and separated from the syngas only by the first cooler 83.

In addition, the ammonia synthesis system may further include a first cooler bypass line 830. Through the first cooler bypass line, the syngas may be directly fed into the second cooler 84 without passing through the first cooler 83, and ammonia may thus be cooled and separated from the syngas.

In detail, when the flow rate of the syngas including ammonia is high or the ammonia content in the syngas is large, the ammonia synthesis system 1 may cool and separate ammonia by primarily cooling the syngas 91 by using the first cooler 83 and secondarily cooling ammonia by using the second cooler 84. On the other hand, when the flow rate of the syngas including ammonia is low or the ammonia content in the syngas is small, the ammonia synthesis system may separate ammonia only by the first cooler 83 or by the second cooler 84. That is, the ammonia synthesis system according to the present disclosure may include the bypass line to thus perform the appropriate ammonia separation by flexibly coping with the ammonia production flow rate which may be changed during the production cycle, thereby providing the flexible process. In addition, when the flow rate of the syngas including ammonia is low or the ammonia content in the syngas is small, the ammonia synthesis system may perform the cooling by using only one cooler, which may prevent the energy loss during the cooling. That is, the ammonia synthesis system may reduce the energy required for separating ammonia and reduce the costs incurred when separating ammonia.

In another embodiment according to the present disclosure, the ammonia synthesis reactor 10 may include two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of the mixed gas; a distribution device disposed upstream from each of the two or more catalyst beds and distributing the mixed gas to the catalyst bed; and the mixed gas supply lines arranged to supply the mixed gas to each distribution device.

In addition, the ammonia synthesis reactor may further include a microwave heating device for emitting microwaves to each of the two or more catalyst beds.

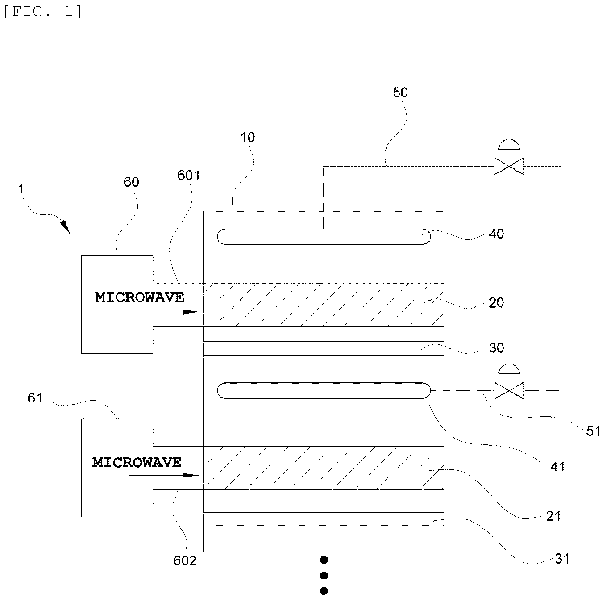

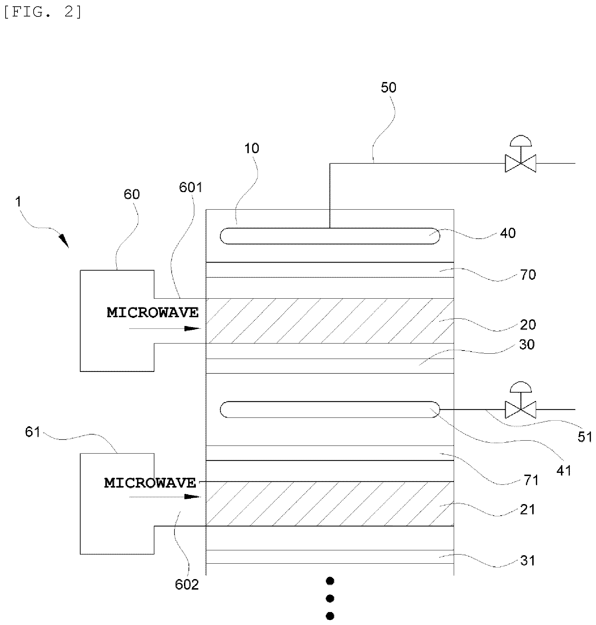

Referring to FIGS. 1 and 2, according to one embodiment of the present disclosure, provided is the ammonia synthesis reactor 10 including two or more catalyst beds 20 and 21; a backflow prevention plate 30 or 31 disposed downstream from each of the catalyst beds for preventing the backflow of the mixed gas; a distribution device 40 or 41 disposed upstream from each of the two or more catalyst beds 20 and 21 and distributing the mixed gas to the catalyst bed 20 or 21; mixed gas supply lines 50 and 51 arranged to supply the mixed gas to each distribution device 40 or 41; and a microwave heating device 60 or 61 for emitting the microwaves to each of the two or more catalyst beds 20 and 21.

This is indicated by the dotted lines in Figs. 1 and 2, noting that corresponding components like microwave heating device, mixed gas supply lines, flow regulating devices, distribution devices, backflow prevention plates (optionally except for the catalyst bed disposed at the lowest of the two or more catalyst beds) may independently be provided for each or some of the multiple catalyst beds.

Hereinafter, the ammonia synthesis reactor 10 including two catalyst beds 20, 21 may be an example of the ammonia synthesis reactor 10 of the present disclosure. The ammonia synthesis reactor according to one embodiment of the present disclosure may include two or more catalyst beds, for example, three, four, five, seven, or ten catalyst beds. The embodiments of the present disclosure are not limited to these numbers of catalyst beds.

The ammonia synthesis system according to another embodiment of the present disclosure may cope with changes in the flow rate that occur during the production cycle by including the mixed gas supply line to supply the mixed gas to each of the two or more catalyst beds. For example, the ammonia synthesis system may be operated by feeding the gas through the mixed gas supply line 50 disposed at the top for the gas to first pass through the catalyst bed 20 disposed at the top when the flow rate of the fed raw material is high, and operated by feeding the gas through the mixed gas supply line 51 disposed at the bottom for the gas to pass through the catalyst bed 21 disposed at the bottom rather than the catalyst bed 20 disposed at the top when the flow rate of the fed raw material is low. Here, the backflow of the mixed gas may be prevented by the backflow prevention plate 30 when the mixed gas is fed through the mixed gas supply line 51 disposed at the bottom to pass through the catalyst bed 21 disposed at the bottom.

In the low flow rate case as described above, there is no need to maintain a uniform temperature throughout the entirety of the reactor because the ammonia synthesis system may be operated by feeding the mixed gas through the mixed gas supply line 51 disposed at the bottom only for the gas to pass through the catalyst bed 21 disposed at the bottom. Therefore, the energy may be saved by reducing the amount of energy required by the system as needed during its operation.

In addition, the ammonia synthesis system may increase the catalyst replacement cycle by maintaining the height of each catalyst bed even during its operation. In general, when a reaction fluid has the low flow rate, distribution at the top of the catalyst bed may be not uniform, which may cause the catalyst disposed even at the same height to have a different reaction performance. The catalyst replacement cycle may be determined by the reaction performance at the bottom of the catalyst bed, and the replacement cycle may become shorter if the reaction performance at some regions at the bottom of the catalyst bed is lowered due to non-uniform distribution caused by a reduced flow rate. However, the catalyst replacement cycle may be increased by maintaining the height of the catalyst beds relatively even if a height of the catalyst bed passed by the gas passes is adjusted even depending on the flow rate, in which case the gas distribution in each catalyst bed may become uniform, as in one embodiment of the ammonia synthesis system according to the present disclosure.

In addition, the ammonia synthesis system according to another embodiment of the present disclosure may include the microwave heating devices 60 and 61 to permit the temperature in the central and in outer parts of the catalyst bed to be made more uniform (less temperature deviation) at the beginning of its operation, thereby improving an ammonia synthesis yield. In detail, the microwave heating device may permit the temperature in the central and in outer parts of the catalyst bed to be made more uniform (less temperature deviation) by emitting the microwaves to the catalyst bed at the beginning of the operation. In addition, the microwave heating device may improve the ammonia synthesis yield before the beginning of the operation by preheating the catalyst bed which may otherwise not be sufficiently preheated before the beginning of the operation.

For example, when the fed raw material has the low flow rate, the ammonia synthesis system may be operated for the gas to pass through the catalyst bed 21 disposed at the bottom rather than the catalyst bed 20 disposed at the top. Here, the mixed gas may not be fed into the catalyst bed 20 disposed at the top, and a temperature of the catalyst bed 20 disposed at the top may thus be decreased over time. If the catalyst bed 20 disposed at the top is used again after this decrease, the ammonia synthesis efficiency may be lower because the temperature of the catalyst bed 20 disposed at the top is decreased. Here, the catalyst bed 20 disposed at the top, which has the lower temperature, may be preheated by the microwaves emitted by the microwave heating device, thus achieving excellent ammonia synthesis efficiency even when the catalyst bed is used again for the operation.

One or more, two or more, three or more, four or more, five or more, or eight or more microwave heating devices may be installed on each catalyst bed, but the number of microwave heating devices is not limited thereto. The number of the microwave heating devices may be increased based on a size of the reactor, and an installation location of the microwave heating device may be adjusted for efficient microwave emission.

The ammonia synthesis system may further include microwave guides 601 and 602. The microwave guide may enable the microwaves emitted by the microwave heating device to reach the catalyst bed more efficiently. The shape or installation location of the guide may be changed based on a microwave waveform.

In another embodiment according to the present disclosure, the number of catalyst beds may be two or more, three or more, four or more, five or more, six or more, seven or more, ten or more, twenty or fewer, ten or fewer, eight or fewer, seven or fewer, six or fewer, five or fewer, four or fewer, three or fewer, two or fewer, or a value between these values. The number of catalyst beds and the number of distribution devices may be the same as each other.

In one embodiment according to the present disclosure, the mixed gas may include at least one or both selected from the group consisting of hydrogen and nitrogen.

Hydrogen may be produced by a device powered by renewable energy. In detail, hydrogen may be produced by a water electrolyzer powered using renewable energy.

Renewable energy may include at least one or more selected from the group consisting of solar energy, photovoltaic energy, bioenergy, wind energy, hydroelectric energy, geothermal energy, ocean energy, and waste energy. Renewable energy shows temporal variability. For example, solar energy is unable to be used at night. Therefore, when hydrogen is produced using the device powered by renewable energy, the ammonia synthesis system is unable to be always operated at a constant flow rate. That is, there is a need for the ammonia synthesis system to cope with changes in the flow rate that occurs during the production cycle due to the temporal variability of renewable energy.

In addition, the mixed gas supplied through the mixed gas supply line 50 or 51 may have a low temperature. Therefore, the mixed gas supplied through the mixed gas supply line 50 or 51 may function as cooling mixed gas, and may also function as a way of cooling the mixed gas flowing in the ammonia synthesis system.

Referring to Fig. 2, the ammonia synthesis system according to another embodiment of the present disclosure may further include distribution plates 70 and 71 each disposed between the catalyst bed 20 or 21 and the distribution device 40 or 41.

In addition, the ammonia synthesis system according to another embodiment of the present disclosure may further include a plurality of mixed gas flow pipes 720 which are fixed to a lower surface 72 of the distribution plate 70 or 71 and through which the mixed gas flows.

The ammonia synthesis system may further include the distribution plate and the mixed gas flow pipe, thereby maintaining the uniform flow rate distribution before the catalyst bed included in the ammonia synthesis reactor even when the flow rate of the fed raw material such as hydrogen is reduced.

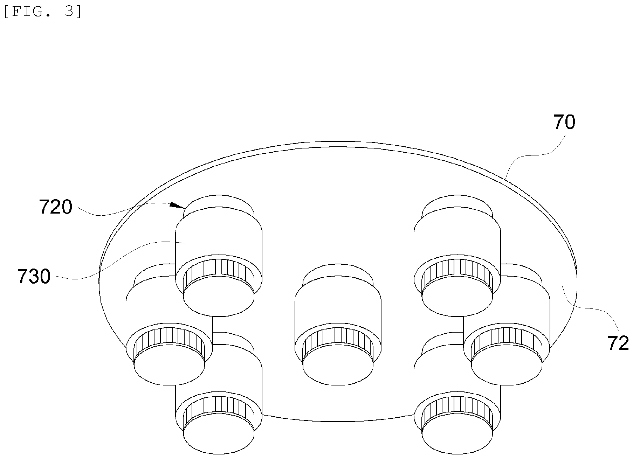

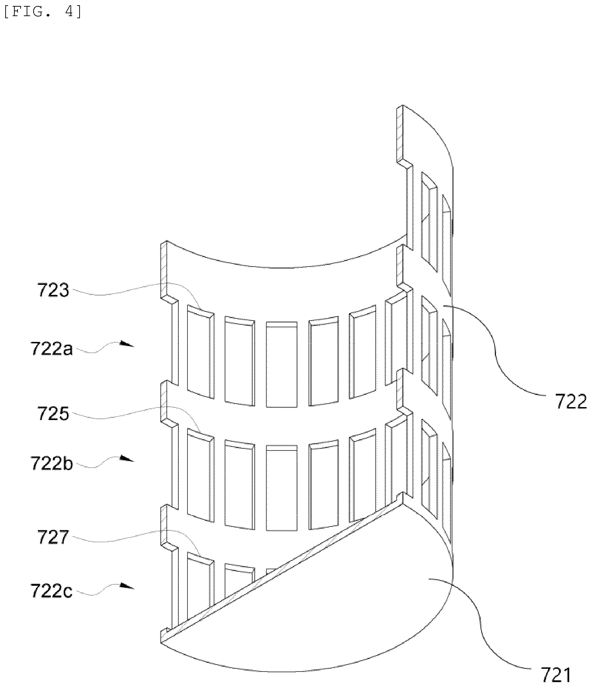

Referring to FIGS. 3 and 4, the mixed gas flow pipe 720 may have a bottom surface 721 and a side surface 722 connecting the bottom surface with the distribution plate.

A plurality of upper openings 723 may be formed in a side surface of an upper part 722a of the mixed gas flow pipe 720 spaced apart from each other along a circumference of the pipe 720, a plurality of middle openings 725 may be formed in a side surface of a middle part 722b of the mixed gas flow pipe 720 spaced apart from each other along the circumference, and a plurality of lower openings 727 may be formed in a side surface of a lower part 722c of the mixed gas flow pipe 720 spaced apart from each other along the circumference. A flow of the mixed gas may be formed through the upper opening 723, the middle opening 725, and the lower opening 727. The mixed gas flow pipe 720 may further include a cover 730 surrounding at least some regions of the side surface of the mixed gas flow pipe 720 to provide a space for the fluid flowing out of the side surface of the mixed gas flow pipe 720 after passing through the upper opening 723 to be guided toward the middle opening 725. The cover 730 may surround at least one or more selected from the group consisting of the upper and middle parts of the side surface of the mixed gas flow pipe 720.

The cover 730 may cause the fluid flowing out of the side surface of the mixed gas flow pipe 720 after passing through the upper opening 723 to be guided toward the middle opening 725. This configuration may form a flow in which the fluid is moved to the outside of the side surface of the mixed gas flow pipe 720 and then moved back to the inside of the side surface. Through the flow formed in this way, the fluids may be more smoothly mixed with each other.

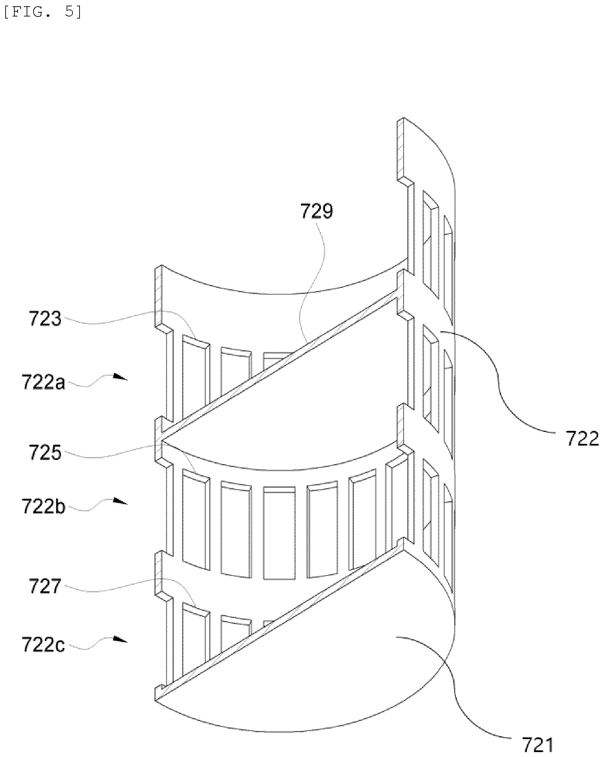

Referring to FIG. 5, the mixed gas flow pipe 720 may further include a separator plate 729 dividing the upper and middle parts of the mixed gas flow pipe 720 from each other. The separator plate 729 may completely separate the upper and middle parts of the mixed gas flow pipe 720 from each other to prevent the fluid from moving inside the mixed gas flow pipe 720. Therefore, the fluid flowing into the upper part of the mixed gas flow pipe 720 may by the separator plate 729 flow out through the upper opening 723 into the space between the mixed gas flow pipe 720 and the cover 730 rather than descending directly to the middle part 722b. The fluid in the space may then flow into the mixed gas flow pipe through the middle opening 725, descend downwards, and flow out of the mixed gas flow pipe 720 through the lower opening 727. As described above, the fluid may form the flow in which the fluid flows out of the mixed gas flow pipe 720, flows back into the inside of the pipe, and flows out of the pipe again, thereby facilitating to mix the fluids more smoothly, and maintaining the uniform flow rate distribution at the front end of the catalyst bed.

In one embodiment according to the present disclosure, each of the mixed gas supply lines 50 and 51 may include a flow regulating device. The flow regulating device may permit the flow rate of the mixed gas to be controlled independently in each of the mixed gas supply lines. In detail, the flow regulating device may independently regulate the flow rate of the mixed gas flowing through each of the mixed gas supply lines for the flow rate of the mixed gas entering the distribution device to be maintained within a desired flow rate range.

The flow regulating device may be a flow regulating valve.

In one embodiment according to the present disclosure, each of the mixed gas supply lines 50 and 51 may branch from one main supply line or the main header. Alternatively, each of the mixed gas supply lines 50 and 51 may receive at least one gas or both gasses selected from the group consisting of nitrogen and hydrogen from each of individual supply lines.

In another embodiment according to the present disclosure, each of the backflow prevention plates 30 and 31 may include a plurality of openings 302, and each of the plurality of openings 302 included in each of the backflow prevention plates 30 and 31 may have a backflow prevention cap 303 selectively opened based on a flow direction of the gas. The ammonia synthesis system according to the present disclosure may include the backflow prevention plate 30 or 31 having the backflow prevention cap 303, thereby preventing the backflow of the mixed gas even when the mixed gas is fed through the mixed gas supply line 51 disposed at the bottom to pass through the catalyst bed 21 disposed at the bottom. In addition, the ammonia synthesis system may be implemented to prevent the backflow of the mixed gas as described above to thus save the energy by reducing the amount of energy required by the system as needed during its operation, and increase the catalyst replacement cycle by maintaining the height of each catalyst bed relatively even.

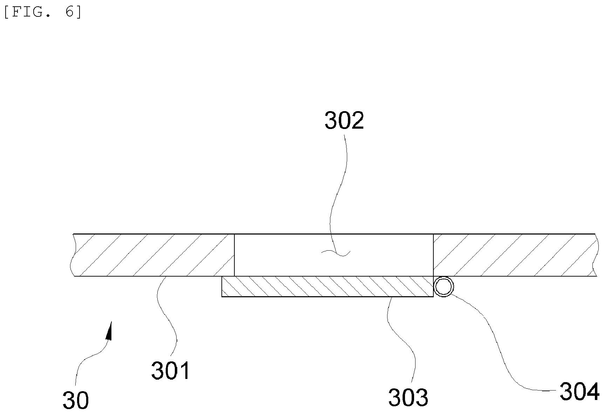

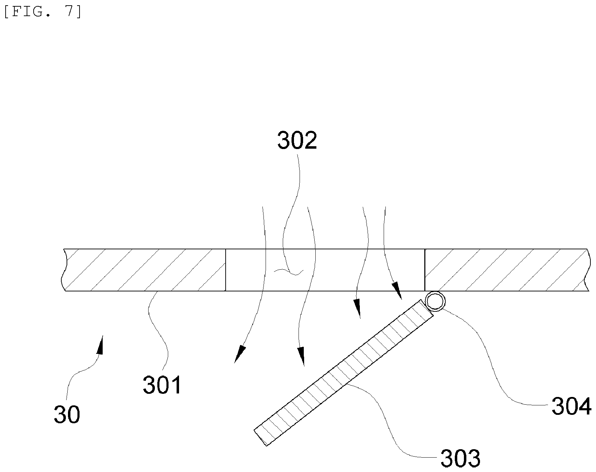

Referring to FIGS. 6 and 7, the backflow prevention cap 303 may be coupled to a hinge 304 disposed at a position on each circumference part of the plurality of openings 302 formed in each of the backflow prevention plates 30 and 31. FIG. 7 shows a state where the backflow prevention cap 303, which is coupled to the hinge 304, is opened. When the mixed gas flows from the upstream to downstream of the backflow prevention plate 30 or 31, the backflow prevention cap 303 may be maintained to be opened, and the mixed gas may thus flow normally. FIG. 6 shows a state where the backflow prevention cap 303, which is coupled to the hinge 304, is closed. When the mixed gas is to flow from the downstream to upstream of the backflow prevention plate 30 or 31, the backflow prevention cap 303 will close because of the flow of the mixed gas flowing from the downstream to the upstream. By this principle, the backflow prevention plate 30 or 31 according to the present disclosure may prevent the backflow of the mixed gas.

In another embodiment according to the present disclosure, a coupling part of the hinge 304 that is coupled to the hinge 304 may include a spring to apply an elastic force in a direction in which the backflow prevention cap 303 approaches the distribution plate.

In another embodiment according to the present disclosure, the distribution device 40 or 41 may have a disk shape or a toroidal shape, but the embodiments are not limited thereto, and the embodiments may use a conventional gas distribution device.

In the ammonia synthesis system according to one embodiment of the present disclosure, ammonia may be synthesized at pressures ranging from 1 to 500 bar or 5 to 300 bar.

In addition, in the ammonia synthesis system according to another embodiment of the present disclosure, ammonia may be synthesized at temperatures ranging from 100 to 800°C or 200 to 700°C.

The ammonia synthesis system according to another embodiment of the present disclosure may further include a heat exchanger disposed downstream from each of the two or more catalyst beds to remove heat from an effluent of the catalyst bed. The heat exchanger may surround the catalyst bed or its surroundings. The ammonia synthesis system according to the present disclosure may include an additional heat removal means other than the supply of the cooling mixed gas by further including the heat exchanger. This configuration may permit the flexible operation of the ammonia synthesis system.

In addition, embodiments of the present disclosure may provide an operation method of the ammonia synthesis system. The same description may be applied to a content overlapping a content of the ammonia synthesis system.

One embodiment of the present disclosure may provide an operation method of the ammonia synthesis system as described above, which further includes a second cooler bypass line 840, the method including the following selectively performed modes: a two-stage cooling mode in which the syngas passes through both the first cooler and the second cooler; and a second cooler bypass mode in which the syngas passes through only the first cooler and bypasses the second cooler through the second cooler bypass line 840.

In detail, when the flow rate of the fed raw material is high and the cooling load is large, the ammonia may be separated by performing the two-stage cooling where the syngas passes through both the first cooler 83 and the second cooler 84 as in the two-stage cooling mode. In addition, if the flow rate of the fed raw material is low and the cooling load is small, the system may be operated for the syngas to pass through only the first cooler 83 and bypass the second cooler.

That is, the ammonia synthesis system of the present disclosure may be selectively operated in one of the two-stage separation mode and the second cooler bypass mode as described above to thus flexibly cope with the ammonia production flow rate that may be changed during the production cycle while appropriately separating ammonia, thereby providing a flexible process. In addition, when the flow rate of the syngas including ammonia is low or the ammonia content in the syngas is small, the ammonia synthesis system may prevent excessive cooling, thereby reducing the energy required for separating ammonia and reducing the costs incurred when separating ammonia.

In addition, one embodiment of the present disclosure may provide an ammonia synthesis method. The same description may be applied to a content overlapping the contents of the ammonia synthesis system and the operation method thereof.

An embodiment of the present disclosure may provide the ammonia synthesis method including S1) compressing mixed gas by a compressor and feeding the compressed gas into an ammonia synthesis reactor; S2) producing syngas including ammonia by reacting the compressed mixed gas in the ammonia synthesis reactor; S3) performing preliminary cooling of cooling the syngas produced in S2); and S4) performing secondary cooling of heat-exchanging the syngas cooled in S3) with gaseous nitrogen separated by the air separation unit, wherein gaseous nitrogen heat-exchanged in S4) is supplied to the compressor.

In the ammonia synthesis method according to the present disclosure, it is possible to flexibly cope with changes in the flow rate that occur during the production cycle, suppressing the surge phenomenon in the compressor to permit stable compressor operation, address the issues of a) non-uniform flow rate distribution that occurs at the front end of the catalyst bed and b) the reduced ammonia synthesis yield caused by the temperature deviation in the central and in outer parts of the catalyst bed at the beginning of the operation, and further reduce the energy used for separating ammonia. In particular, in the ammonia synthesis method according to one embodiment of the present disclosure, the compressor may be stably operated by suppressing the surge phenomenon in the compressor even when the flow rate of the fed raw material for the reaction is changed. This configuration is possible by supplying nitrogen heat-exchanged by the second cooler 84 to the feed supply line, which is disposed at the front end of the compressor, through the feed supply line 81.

Further, in the ammonia synthesis method according to another embodiment of the present disclosure, the flexible process operation may be provided by flexibly coping with the ammonia separation even when the ammonia production volume is changed as the flow rate of the fed raw material for the reaction is changed. Furthermore, in the ammonia synthesis method according to another embodiment of the present disclosure, the energy required for separating ammonia may be reduced, and the costs incurred when separating ammonia may be reduced even when the ammonia production volume is changed as the flow rate of the fed raw material for the reaction is changed.

In the ammonia synthesis method according to another embodiment of the present disclosure, gaseous nitrogen, which is separated by the air separation unit and heat-exchanged with air to feed into the air separation unit, may be heat-exchanged with the cooled syngas in S4).

Nitrogen discharged from the air separation unit may be liquid and/or gas, and may have a low temperature of -150 °C or below when discharged from the air separation unit. In this case, if liquid nitrogen and/or gaseous nitrogen of -150°C or below is directly used for cooling ammonia, the boiling point of ammonia is only about -33°C, and the temperature of the ammonia being cooled may thus be unnecessarily lowered, which may result in energy loss. Therefore, low-temperature gaseous and/or liquid nitrogen, discharged from the air separation unit, may first be heat-exchanged with air to feed into the air separation unit, thereby reducing the energy required by the air separation unit for cooling air, and the temperature of gaseous nitrogen heat-exchanged by the air cooler may be adjusted not to be excessively low compared to the boiling point of ammonia, and relatively high-temperature gaseous nitrogen may then be heat-exchanged with the cooled syngas in S4), thereby reducing the energy required for cooling air and ammonia.

In another embodiment according to the present disclosure, the ammonia synthesis reactor may include two or more catalyst beds included in the ammonia synthesis reactor; a backflow prevention plate disposed downstream from each of the catalyst beds, optionally except for the catalyst bed disposed at the lowest of the two or more catalyst beds, for preventing the backflow of the mixed gas; a distribution device disposed upstream from each of the two or more catalyst beds and distributing the mixed gas to the catalyst bed; and mixed gas supply lines arranged to supply the mixed gas to each distribution device.

As set forth above, the ammonia synthesis system according to one embodiment of the present disclosure may cope with changes in the flow rate that occurs during the production cycle.

The ammonia synthesis system according to another embodiment of the present disclosure may maintain the uniform flow rate distribution at the front end of the catalyst bed included in the ammonia synthesis reactor even when the flow rate of the raw material, such as hydrogen, fed into the ammonia synthesis system is decreased.

The ammonia synthesis system according to still another embodiment of the present disclosure may improve the ammonia synthesis yield by providing for more uniform temperatures in the central and in outer parts of the catalyst bed (lower temperature deviations) at the beginning of its operation.

The ammonia synthesis system according to one embodiment of the present disclosure may improve the ammonia synthesis yield at the beginning of its operation by preheating the catalyst bed before the beginning of its operation.

The ammonia synthesis system according to one embodiment of the present disclosure may save energy by reducing the amount of energy required by the system during its operation.

The ammonia synthesis system according to one embodiment of the present disclosure may increase the catalyst replacement cycle by maintaining the height of each catalyst bed even during the operation.

The ammonia synthesis system according to another embodiment of the present disclosure may stably operate the compressor by suppressing the surge phenomenon in the compressor even when the flow rate of the raw material fed into the ammonia synthesis system is changed.

The ammonia synthesis system according to one embodiment of the present disclosure may synthesize ammonia in a eco-friendly manner.

The ammonia synthesis system according to another embodiment of the present disclosure may provide the flexible process operation by flexibly coping with the ammonia separation even though the ammonia production volume is changed as the flow rate of the raw material fed into the ammonia synthesis system is changed.

The ammonia synthesis system according to another embodiment of the present disclosure may reduce the energy required for separating ammonia and reduce the costs incurred when separating ammonia by coping with the change in the ammonia production volume even when this change occurs as the flow rate of the raw material fed into the ammonia synthesis system is changed.

The content described above represents embodiments of the present disclosure, and the present disclosure may further include other embodiments within the scope of the present disclosure. Furthermore, the embodiments may be combined to form additional embodiments.

## Claims

1. An ammonia synthesis system comprising:
a compressor (82) for compressing mixed gas;
a feed supply line (81) for supplying the mixed gas to the compressor (82);
an ammonia synthesis reactor (10) for synthesizing ammonia by feeding the mixed gas compressed by the compressor (82) into the reactor (10);
an air separation unit (88) for separating nitrogen from air;
a first cooler (83) for cooling syngas including ammonia discharged from the ammonia synthesis reactor (10); and
a second cooler (84) for heat-exchanging gaseous nitrogen separated by the air separation unit (88) with the syngas cooled by the first cooler (83),
wherein gaseous nitrogen heat-exchanged by the second cooler (84) is supplied to the feed supply line (81).

2. The system of claim 1, further comprising an air cooler (89) for cooling air by heat-exchanging gaseous nitrogen separated by the air separation unit (88) with air to feed into the air separation unit (88),
wherein gaseous nitrogen heat-exchanged by the air cooler (89) is fed to the second cooler (84).

3. The system of claim 1 or 2, further comprising a second cooler bypass line (840), which through the syngas is cooled and separated only by the first cooler (83),
or further comprising a first cooler bypass line (830) for passing the syngas directly to the second cooler (84) without through the first cooler (83).

4. The system of any one of the preceding claims,
further comprising a buffer tank storing the nitrogen heat-exchanged in the second cooler (84) and/or a regeneration stream including hydrogen and nitrogen cooled and separated from the syngas in the second cooler (84).

5. The system of any one of the preceding claims,
further comprising an adsorption device including an adsorbent at the front end and at the rear end of the first cooler (83) or the second cooler (84).

6. The system of any one of the preceding claims, wherein the ammonia synthesis reactor (10) includes:
two or more catalyst beds (20, 21) included in the ammonia synthesis reactor (10);
a backflow prevention plate (30, 31) disposed downstream from each of the catalyst beds (20, 21), optionally except for the catalyst bed disposed at the lowest of the two or more catalyst beds, for preventing a backflow of the mixed gas;
a distribution device (40, 41) disposed upstream from each of the two or more catalyst beds (20, 21) and distributing the mixed gas to the catalyst bed (20, 21); and
mixed gas supply lines (50, 51) arranged to supply the mixed gas to each distribution device (40, 41).

7. The system of claim 6, further comprising distribution plates (70, 71) each disposed between the catalyst bed (20, 21) and the distribution device (40, 41).

8. The system of claim 6 or 7, further comprising a plurality of mixed gas flow pipes (720) which are fixed to a lower surface of the distribution plate (70, 71) and through which the mixed gas flows.

9. The system of any one of claims 6 to 8, wherein the mixed gas flow pipe (720) has a bottom surface (721) and a side surface (722) connecting the bottom surface with the distribution plate (70, 71),
wherein a plurality of upper openings (723) are formed in a side surface of an upper part (722a) of the mixed gas flow pipe (720) spaced apart from each other along a circumference of the pipe (720),
wherein a plurality of middle openings (725) are formed in a side surface of a middle part (722b) of the mixed gas flow pipe (720) spaced apart from each other along the circumference, and
wherein a plurality of lower openings (727) are formed in a side surface of a lower part (722c) of the mixed gas flow pipe (720) spaced apart from each other along the circumference,
optionally wherein the mixed gas flow pipe (720) includes a cover (730) surrounding at least some regions of the side surface of the mixed gas flow pipe (720) to provide a space for a fluid flowing out of the side surface of the mixed gas flow pipe (720) after passing through the upper opening (723) to be guided toward the middle opening (725).

10. The system of sny one of claims 6 to 9, wherein the mixed gas flow pipe (720) further includes a separator plate (729) dividing the upper (722a) and middle parts (722b) of the mixed gas flow pipe (720) from each other.

11. The system of any one of the preceding claims, further comprising a heat exchanger disposed downstream from each of the two or more catalyst beds (20, 21) to remove heat from an effluent of the catalyst bed.

12. The system of any one of the preceding claims, wherein each of the mixed gas supply lines (50, 51) includes a flow regulating device.

13. An ammonia synthesis method using the ammonia synthesis system according to any one of the preceding claims.

14. The ammonia synthesis method of claim 13, comprising:
compressing mixed gas by a compressor (82) and feeding the compressed gas into an ammonia synthesis reactor (10);
producing syngas including ammonia by reacting the compressed mixed gas by the ammonia synthesis reactor (10); and
cooling the syngas with the following selectively performed modes:
a two-stage cooling mode in which the syngas passes through both the first cooler (83) and the second cooler (84) ;
a second cooler bypass mode in which the syngas passes through only the first cooler (83) and bypasses the second cooler (84) through the second cooler bypass line; and
a first cooler bypass line in which the syngas passes through only to the second cooler (84) without through the first cooler(83);
wherein the syngas is cooled in the second cooler (84) by exchanging with gaseous nitrogen separated by the air separation unit (88),
wherein the gaseous nitrogen after the heat-exchanging is supplied to the compressor (82).

15. The method of claim 14, wherein the gaseous nitrogen, before the heat-exchanging in the second cooler (84), is heat-exchanged with the air to feed into the air separator unit (88) in the air cooler (89).
